Europäisches Patentamt

European Patent Office

Office européen des brevets

(11) Veröffentlichungsnummer: **0 208 865**
A1

## (12) EUROPÄISCHE PATENTANMELDUNG

(21) Anmeldenummer: 86106531.6

(22) Anmeldetag: 14.05.86

(51) Int. Cl.⁴: **B 62 D 25/20**, B 62 D 21/02

(30) Priorität: 23.05.85 DE 3518519

(71) Anmelder: **Peters, Reinhard, Feldstrasse 8,
D-4795 Delbrück (DE)**

(43) Veröffentlichungstag der Anmeldung: 21.01.87
**Patentblatt 87/4**

(72) Erfinder: **Peters, Reinhard, Feldstrasse 8,
D-4795 Delbrück (DE)**

(84) Benannte Vertragsstaaten: **BE DE LU NL SE**

(74) Vertreter: **Brake, Klaus, Dipl.-Ing., Kreuzstrasse 32,
D-4800 Bielefeld 1 (DE)**

(54) Teile-Bausatz für den Umbau einer Limousine in ein Kabriolett.

(57) Ein Bausatz für die Umrüstung einer Kraftfahrzeug-Limusine in ein Kabriolett weist einen festen Bodenrahmen (10), zwei Paar Knotenbleche und ein gelenkig zusammenlegbares Faltplanen-Traggestell auf. Im Bodenrahmen (10) sind zwei parallele, waagerechte Längsträger (14) in einem Abstand voneinander angeordnet, die durch mehrere Querträger (15 bis 17) miteinander verbunden sind. Dieser Bodenrahmen (10) kann unter das Bodenblech eines Kraftfahrzeugs geschraubt werden und auf diese Weise die erforderliche Steifigkeit erzeugen.

0208865

Herr Reinhard Peters, Feldstr. 8, 4795 Delbrück

Kraftfahrzeugteile-Bausatz

Die Erfindung betrifft einen Bausatz für die Umrüstung einer Kraftfahrzeug-Limousine in ein Kabriolett.

Beim Umbau einer Limousine in ein Kabriolett muß das Fahrzeugdach abgetrennt werden. Dadurch verliert die Fahrzeugkarosserie einen Teil ihrer Festigkeit, da das an die Stelle des Blechdaches tretende, von Hand zu betätigende Stoff-Faltdach nicht die Steifigkeit des Blechdaches hat.

- 2 -

Der Erfindung liegt daher die Aufgabe zugrunde, einen Bausatz für die Umrüstung einer Kraftfahrzeug-Limousine in ein Kabriolett zu schaffen, mit welchem die erforderliche Festigkeitserhöhung des Fahrzeugrahmens und des Fahrzeugaufbaus erzielt werden kann.

Diese Aufgabe wird erfindungsgemäß durch einen festen Bodenrahmen, zwei Paar Knotenbleche und ein gelenkig zusammenlegbares Faltplanen-Traggestell gelöst, die den am Fahrzeug anzubringenden Bausatz bilden. Der feste Bodenrahmen wird unterhalb des Bodens des Fahrzeugs angeschraubt, so daß sich hier eine erhöhte Steifigkeit ergibt, die es ermöglicht, auf das Blechdach des Fahrzeugs zu verzichten.

Bevorzugt ist jedem Längsträger des Bodenrahmens ein seinem äußeren senkrechten Schenkel entsprechendes Flacheisen zugeordnet, an welchem der Längsträger mittels durch fluchtende waagerechte Bohrungen hindurchsteckbarer Schrauben und aufschraubbarer Muttern befestigbar ist. Am Fahrzeug wird in Längsrichtung rechts und links jeweils ein Flacheisen angeschweißt, an dem der Bodenrahmen verschraubt wird. Auf diese Weise ergibt sich bei hoher Festigkeit und Steifigkeit der Fahrzeugkarosserie eine leichte Montagemöglichkeit des Bodenrahmens.

Bevorzugt sind von den beiden Paaren von Knotenblechen die hinteren Knotenbleche quaderförmig und in der Seitenansicht rechteckig ausgebildet, während die vorderen Knotenbleche in der Seitenansicht eine L-Form aufweisen. Diese Knotenbleche werden in den Einstiegen vorn und hinten in der Karosserie eingeschweißt und dienen als weitere Maßnahme zur Festigkeitserhöhung.

Bevorzugte Ausführungsformen der Erfindung sind in den Schutzansprüchen enthalten. Der Schutzumfang erstreckt sich nicht nur auf die beanspruchten Einzelmerkmale, sondern auch auf deren Kombination.

0208865

Ein Ausführungsbeispiel der Erfindung ist in der Zeichnung dargestellt und wird im folgenden näher beschrieben. Es zeigen:

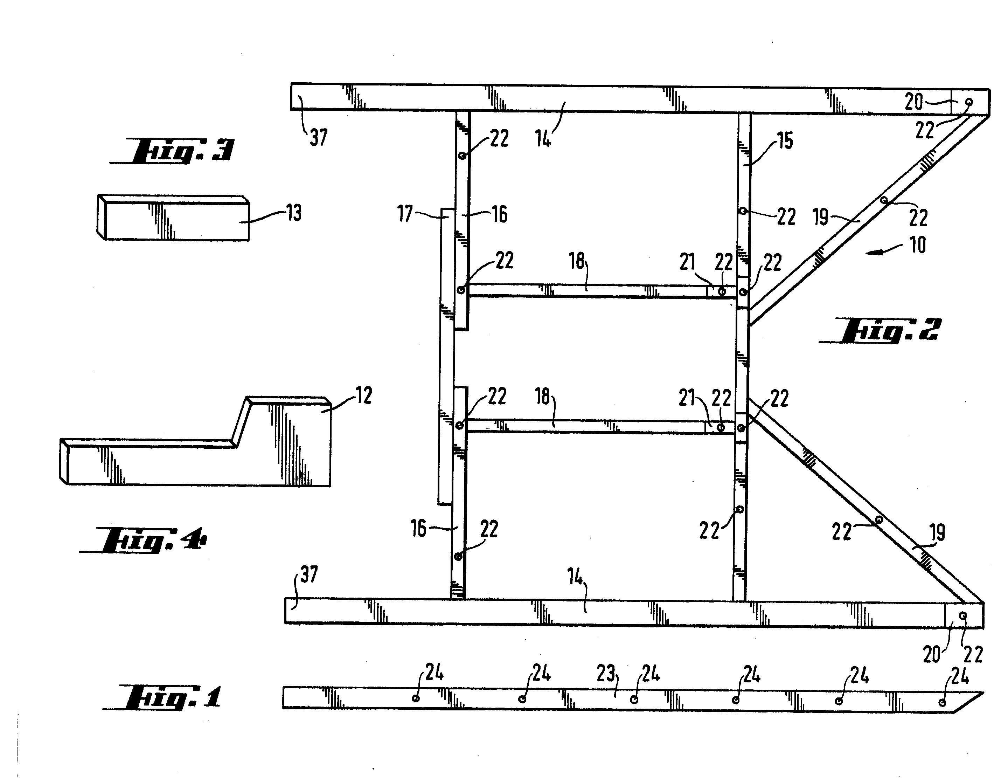

Fig.1    eine Seitenansicht eines Flacheisens;

Fig.2    eine Draufsicht auf einen zusammengebauten Bodenrahmen;

Fig.3    eine perspektivische Ansicht eines hinteren Knotenblechs;

Fig.4    eine perspektivische Ansicht eines vorderen Knotenblechs;

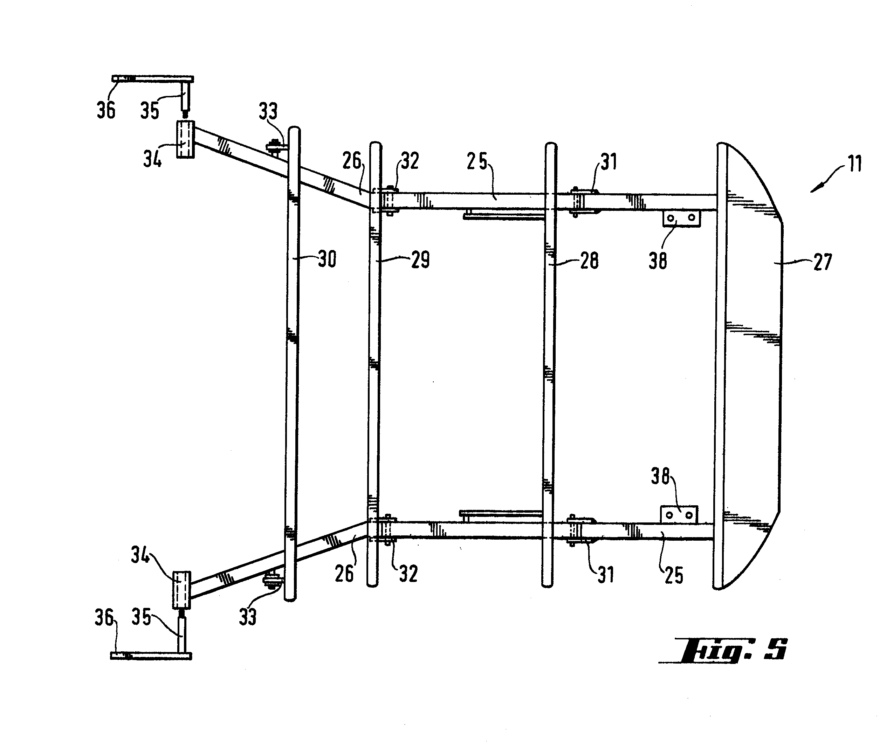

Fig.5    eine Draufsicht auf ein Faltplanen-Traggestell in der ausgeklappten Lage.

Der erfindungsgemäße Bausatz besteht aus einem Bodenrahmen 10, einem Faltplanen-Traggestell 11, zwei gleichen vorderen Knotenblechen 12 und zwei gleichen hinteren Knotenblechen 13. Die vorderen Knotenbleche 12 sind in der Seitenansicht L-förmig, während die hinteren Knotenbleche 13 quaderförmig, in der Seitenansicht also rechteckig sind.

Der Bodenrahmen 10 ist aus zwei parallelen Längsträgern 14, einem vorderen Querträger 15 und drei hinteren Querträgern 16 und 17/ zusammengesetzt. Zu den waagerechten Längsträgern 14 verlaufen die Querträger 15 bis 17 rechtwinklig und verbinden diese miteinander. Zwischen dem vorderen Querträger 15 und den hinteren Querträgern
16 sind zwei zu den Längsträgern 14 parallele Längsstreben 18 angeordnet, die voneinander und von den
Längsträgern 14 jeweils Abstände einhalten. Die vorderen Enden der Längsträger 14 sind über Schrägstreben
19 mit dem vorderen Querträger 15 verbunden, wobei an
den vorderen Enden der Längsträger 14 Ausgleichsstücke
20 angeordnet sind. Auch an den Längsstreben 18 können
im Verbindungsbereich mit dem vorderen Querträger 15
Ausgleichsstücke 21 vorgesehen sein.

Die waagerechten Längsträger 14 sind im Querschnitt
in Form eines umgekehrten U-Profils ausgeführt, so daß
der U-Steg sich oben befindet und von diesem die U-
Schenkel herabragen. Die Querträger 15 bis 17, die
Längsstreben 18 und die Schrägstreben 19 sind Vierkantrohre mit quadratischem Querschnitt. Die Verbindung der Teile aneinander ist durch Verschweißung hergestellt.

Im Ausführungsbeispiel ist als vorderer Querträger 15
ein durchgehender Träger verwendet, während mehrere
hintere Querträger 16 und 17 zu einem Querträgerstrang zusammengefügt sind. Die in einem Abstand voneinander fluchtend angeordneten hinteren Querträger
16 sind über einen parallelen, den Abstand überbrückenden Querträger 17, der an den Querträgern 16
befestigt ist, miteinander verbunden. Diese Art der
Querträger-Ausführung kann bei einem bestimmten Wagentyp vorgesehen werden, während die Ausführung des einzigen vorderen Querträgers 15 sich für einen anderen Wagentyp besser eignet.

Zur Befestigung des Bodenrahmens 10 an der Unterseite des Fahrzeugbodenblechs sind in den Trägern und Streben mehrere senkrechte Bohrungen 22 angeordnet, durch welche Befestigungsschrauben hindurchgesteckt werden können. Der Bodenrahmen 10 wird also unter dem Fahrzeugboden angeschraubt. Außerdem werden am Fahrzeug in Längsrichtung rechts und links Flacheisen 23 angeschweißt, die eine solche Lage haben, daß sie die Längsträger 14 an deren Außenseiten umgeben. Fluchtende waagerechte Bohrungen 24 der Flacheisen 23 und der an diesen anliegenden äußeren Schenkel der Längsträger 14 ermöglichen es, die Längsträger 14 mittels durch die Bohrungen 24 durchgesteckter Schrauben und aufgeschraubter Muttern an den Flacheisen 23 zu befestigen.

Das Traggestell 11 für die das Dach bildende Faltplane des Fahrzeugs besteht aus zwei parallelen Längsholmen 25, die an ihren hinteren Enden in Schrägholme 26 übergehen und aus die Holme miteinander verbindenden Querträgern. So befindet sich an den vorderen Enden der Längsholme 25 ein erster Querträger 27, hinter dem in Abständen ein zweiter Querträger 28, ein dritter Querträger 29 und ein vierter Querträger 30 folgen. Um das Traggestell 11 mit der daran befestigten Faltplane nach hinten aufklappen und zusammenfalten zu können, weist jeder Längsholm 25 ein erstes Gelenk 31 und ein zweites Gelenk 32 auf, die in Abständen hintereinander angeordnet sind. Im zweiten Gelenk 32 ist der zugehörige Schrägholm 26 angelenkt, in dessen Verlauf sich ein drittes Gelenk 33 befindet, mit welchem der vierte Querträger 30 an dem Traggestell 11 angelenkt ist. Die hinteren Enden der Schrägholme 26 weisen Lagerhülsen 34 auf, die mit fluchtenden Bohrungen an waagerechten Lagerbolzen 35 gelagert sind. Diese wiederum sind an Lagerplatten 36, von denen sie abstehen, befestigt, wobei die Lagerplatten 36 im Fahrzeug befestigt sind. Das gesamte Traggestell 11 läßt sich also durch Verschwenkung an seinen Gelenken 31 bis 35 zusammenfalten und im hinteren Teil des Fahrgastraumes unterbringen.

Die Maßnahmen zur Festigkeitserhöhung des Fahrzeugrahmens und des Aufbaus bestehen also darin, daß an der Kante der Türschweller in Längsrichtung rechts und links jeweils das Flacheisen 23 angeschweißt wird, an dem der Bodenrahmen 10 verschraubt wird. Außerdem wird der Bodenrahmen 10 direkt am Fahrzeugboden verschraubt und mit den hinteren Enden 37 seiner Längsträger 14 mit dem Achshalter verschweißt. Außerdem werden in die Einstiege vorn (im A-Säulenbereich) und hinten (im B-Säulenbereich) die vorderen Knotenbleche 12 und die hinteren Knotenbleche 13 eingeschweißt.

Die das Dach bildende Faltplane für das Traggestell 11 besteht aus reißfestem, schwer entflammbaren, mehrschichtigen Verdeckmaterial, an welchem hinten und an den Seiten hinten Klarsichtfolien angebracht sind. Das Traggestell 11 ist im wesentlichen eine Rohrkonstruktion, an den vorderen Innenseiten der Längsholme 25 befinden sich Aufnahmeplatten 38 für handelsübliche Verschlüsse.

Herr Reinhard Peters, Feldstr. 8, 4795 Delbrück

Kraftfahrzeugteile-Bausatz

Schutzansprüche

1. Bausatz für die Umrüstung einer Kraftfahrzeug-Limousine in ein Kabriolett, gekennzeichnet durch einen festen Bodenrahmen (10), zwei Paar Knotenbleche (12, 13) und ein gelenkig zusammenlegbares Faltplanen-Traggestell (11).

- 2 -

2. Bausatz nach Anspruch 1, dadurch gekennzeichnet, daß der Bodenrahmen (10) zwei parallele, waagerechte, in einem Abstand voneinander angeordnete Längsträger (14) aufweist, die durch mehrere Querträger (15 bis 17) miteinander verbunden sind.

3. Bausatz nach den Ansprüchen 1 und 2, dadurch gekennzeichnet, daß jeweils das vordere Ende eines Längsträgers (14) mit einem vorderen Querträger (15) über eine Schrägstrebe (19) verbunden ist, wobei die beiden Schrägstreben (19) sich zwischen den beiden Längsträgern (14) befinden.

4. Bausatz nach den Ansprüchen 1 bis 3, dadurch gekennzeichnet, daß zwischen den vorderen Querträgern (15) und den hinteren Querträgern (16) zwei zu den Längsträgern (14) parallele Längsstreben (18) im Abstand voneinander angeordnet sind.

5. Bausatz nach den Ansprüchen 1 bis 4, dadurch gekennzeichnet, daß die beiden Längsträger (14), die Querträger (15 bis 17), die beiden Schrägstreben (19) und die beiden Längsstreben (18) an den Berührungstellen miteinander verschweißt sind.

6. Bausatz nach den Ansprüchen 1 bis 5, dadurch gekennzeichnet, daß die Längsträger (14) im Querschnitt U-förmig ausgebildet sind, wobei jeweils von dem oben befindlichen U-Steg die U-Schenkel nach unten ragen.

7. Bausatz nach den Ansprüchen 1 bis 6, dadurch gekennzeichnet, daß die Querträger (15 bis 17), die Schrägstreben (19) und die Längsstreben (18) als Vierkantrohre mit quadratischem Querschnitt ausgebildet sind.

8. Bausatz nach den Ansprüchen 1 bis 7, dadurch gekennzeichnet, daß jedem Längsträger (14) ein seinem äußeren senkrechten Schenkel entsprechendes Flacheisen (23) zugeordnet ist, an welchem der Längsträger (14) mittels durch fluchtende waagerechte Bohrungen (24) hindurchsteckbarer Schrauben und aufschraubbarer Muttern befestigbar ist.

9. Bausatz nach den Ansprüchen 1 bis 8, dadurch gekennzeichnet, daß der Bodenrahmen (10) mehrere senkrechte Bohrungen (22) zum Durchstecken von Befestigungsschrauben aufweist.

10. Bausatz nach den Ansprüchen 1 bis 9, dadurch gekennzeichnet, daß mehrere Querträger (16, 17) zu einem Querträgerstrang zusammengesetzt und aneinander befestigt sind.

11. Bausatz nach den Ansprüchen 1 bis 10, dadurch gekennzeichnet, daß von den beiden Paaren von Knotenblechen die hinteren Knotenbleche (13) quaderförmig und in der Seitenansicht rechteckig ausgebildet sind, während die vorderen Knotenbleche (12) in der Seitenansicht eine L-Form aufweisen.

12. Bausatz nach den Ansprüchen 1 bis 11, dadurch gekennzeichnet, daß das Traggestell (11) für die Faltplane aus zwei parallelen, Gelenke (31, 32) aufweisenden Längsholmen (25) besteht, an deren hinteren Enden sich jeweils ein Schrägholm (26) anschließt, wobei an den Längsholmen (25) und an den Schrägholmen (26) mehrere parallele Querträger (27 bis 30) in Abständen hintereinander befestigt sind.

13. Bausatz nach den Ansprüchen 1 bis 12, dadurch gekennzeichnet, daß die Schrägholmen (26) an ihren hinteren Enden mit Lagerhülsen (34) versehen sind, mit welchem sie auf fluchtende waagerechte Lagerbolzen (35) gesteckt sind, die von Lagerplatten (36) abstehend an diesen befestigt sind.

C208865

1/2

Fig. 1

Fig. 2

Fig. 3

Fig. 4

Fig. 5

Europäisches
Patentamt

**EUROPÄISCHER RECHERCHENBERICHT**

0208865

Nummer der Anmeldung

EP 86 10 6531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-4 346 930 (NORTHEY) <br> * ganzes Dokument * | 1 | B 62 D 25/20 <br> B 62 D 21/02 |
| A | | 2,12, 13 | |
| | --- | | |
| X | US-A-4 261 615 (DEAVER) <br> * Spalte 2, Zeile 30 - Spalte 3, Zeile 51; Figuren 2-7,15 * | 1 | |
| A | | 2,6,12 ,13 | |
| | --- | | |
| X | DE-A-3 334 002 (EBERT) <br> * Zusammenfassung; Figur * | 1 | |
| | --- | | |
| X | DE-U-8 334 199 (IRMSCHER) <br> * Ansprüche 1-4; Figuren 1,2 * | 1 | |
| | --- | | |
| A | GB-A- 6 977 (HUMBER et al.) <br> * Figuren 1,2 * | 2-4 | |
| | ----- | | |

RECHERCHIERTE SACHGEBIETE (Int. Cl.4)

B 62 D 25/00
B 62 D 21/00
B 62 D 31/00
B 62 D 47/00
B 62 D 63/00
B 62 D 65/00
B 62 D 23/00
B 62 D 27/00

Der vorliegende Recherchenbericht wurde für alle Patentansprüche erstellt.

| Recherchenort <br> BERLIN | Abschlußdatum der Recherche <br> 25-07-1986 | Prüfer <br> KRIEGER P O |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82